# EUROPÄISCHE PATENTANMELDUNG

(11) **EP 1 511 242 A2**
(43) Veröffentlichungstag der Anmeldung: **02.03.2005**
(21) Anmeldenummer: 04019533.1
(22) Anmeldetag: 18.08.2004
(51) Int. Cl.: H04L 12/56

(54) **Verfahren und System zur Weiterleitung von Informationen in einem verteilten Netzwerk**

(30) Priorität: 30.08.2003 DE 10340120
(71) Anmelder: ABB PATENT GmbH, 68526 Ladenburg (DE)
(72) Erfinder: Heilig, Peter, Dipl.-Ing., 69121 Heidelberg (DE); Winnewisser, Christian, Dipl.-Ing., 69115 Heidelberg (DE)
(74) Vertreter: Miller, Toivo

(57) **Zusammenfassung**

Die Erfindung bezieht sich auf ein Verfahren und ein System zur Weiterleitung von Information mittels Datenpaketen (A) innerhalb eines verteilten Netzwerkes, welches mehrere über Linien- oder Bereichskoppler (10) verbundene Buslinien (L1), (L2) mit daran angeschlossenen Systemkomponenten umfasst und in den Linien- oder Bereichskopplern (10) Datenstrukturen (20) vorhanden sind, in welchen Informationen über die weiterzuleitenden Datenpakete (A) abgelegt werden.
In den Datenstrukturen (20) werden die Informationen über die weiterzuleitenden Datenpakete (A) dynamisch verwaltet und die Datenstrukturen (20) zyklisch und/oder ereignisorientiert automatisch generiert.

## Beschreibung

Die Erfindung betrifft ein Verfahren und ein System zur Weiterleitung von Informationen/Daten zwischen Systemkomponenten in einem verteilten Netzwerk, insbesondere einem Installationsbussystem der Gebäudetechnik, beispielsweise dem Europäischen Installationsbus (EIB), dem Local Operating Network (LON) oder dem Local Control Network (LCN).

In einem verteilten System sind den einzelnen Systemkomponenten oder Geräten Adressen zugeordnet, über welche sich die Geräte identifizieren lassen. Die Übertragung von Informationen zwischen den Geräten über das Bussystem wird vorzugsweise mittels Datentelegrammen oder Datenpaketen realisiert, wobei die Telegramme beispielsweise Informationen über die Adressen der Geräte aufweisen.

Um das Telegrammaufkommen zwischen den Geräten des Bussystems zu reduzieren und damit unnötige Verzögerungszeiten zu eliminieren, werden mittelgroße und größere Anlagen in sogenannte Linien und Bereiche aufgeteilt. Diese Linien und Bereiche sind über Linien-/Bereichskoppler miteinander verbunden, über die auch der Telegrammaustausch ausgeführt wird. Diese Systemtopologie ist beispielsweise im "Handbook EIB", Volume 3: System Specifications, Part 1: Architecture, Chapter 1: Architecture, Konnex Association, 2001 beschrieben.

Die Linien-/Bereichskoppler, im folgenden auch als Koppler bezeichnet, leiten nur die Informationen in Form von Datentelegrammen weiter, welche in weiteren Linien und Bereichen benötigt werden. Eine Beschreibung der Datenübertragung zwischen Linien und Bereichen ist im "Handbook EIB", Volume 3: System Specifications, Part 2: Communication Media, Chapter 2: Twisted Pair 1 und Part 3: Communication, Chapter 3: Network Layer, Architecture, Konnex Association, 2001 angegeben.

Für die Datenübertragung ist in den jeweiligen Kopplern jeweils eine Datenstruktur in Form einer Filtertabelle abgelegt, wobei die Filtertabelle so aufgebaut ist, dass sie nur solche Datentelegramme weiterleitet, welche in den weiteren Linien und Bereichen benötigt werden.

Die Kommunikation innerhalb der Linien und Bereiche des verteilten Systems über die Koppler wird durch eine Übertragung der Datenpakete und unter Verwendung eines Sammelaufrufes (Broadcast), einer physikalischer Adressierung oder einer Gruppenadressierung durchgeführt.

Wird ein Broadcast zur Datenübertragung verwendet, werden die Datenpakete grundsätzlich an alle Linien und Bereiche des verteilten Netzwerkes übertragen.

Bei der physikalischen Adressierung ermittelt der Koppler anhand der Zieladresse und seiner eigenen Adresse unter Verwendung eines Algorithmus, wie er beispielsweise im EBI Handbook V1.0, Volume 3 Part 3, Chapter 3, 2.4.3.3 beschrieben ist, fest, ob er das Paket weiterleiten soll, oder nicht.

Wird die Datenübertragung mittels der Gruppenadressierung durchgeführt, stellt der Koppler anhand der Gruppenadresse und der Informationen in der Filtertabelle fest ob er ein Datenpaket weiterleiten soll.

Datenpakete, welche mittels der Gruppenadressierung übertragen werden, enthalten keinerlei topologische Informationen, aus denen hervorgeht, ob sie weitergeleitet werden sollen. Daraus ergibt sich, dass in der Filtertabelle jedes Kopplers die Informationen über die Weiterleitung der Datenpakete in Form von Adressen abgelegt werden.

Die Filtertabellen leiten demzufolge nur die Datentelegramme weiter, welche in weiteren Linien oder Bereichen benötigt werden. Dabei ist die Realisierung der Filtertabellen von der Größe der Anlagentopologie abhängig. Die Anzahl der zu filternden Telegramme steigt um so mehr, je umfangreicher die Anlagentopologie ist.

Die Filtertabellen werden während der Inbetriebnahmephase mittels einer speziellen Software, vorzugsweise einer Parametrier-Software, für das komplette System erzeugt und in die Koppler geladen. Bei diesem Vorgang werden in den Filtertabellen definierte Adressen fest eingestellt, welche die Informationen über die Weiterleitung der Datentelegramme enthalten.

Dieser Vorgang ist jedoch sehr zeitintensiv und mit einem hohen administrativen Aufwand verbunden, was insbesondere den Inbetriebnahmeaufwand erheblich erhöht. Alle Änderungen innerhalb des verteilten Systems ziehen ein erneutes Erzeugen und Laden der Filtertabellen nach sich.

Ein weiterer Nachteil ergibt sich daraus, dass nach jeder Änderung der Adressenzuordnungen, beispielsweise nach Wartungsarbeiten am System, Änderungen der Konfiguration innerhalb des Systems oder nach einem Gerätetausch die Filtertabellen erneut zu erzeugen, in den Koppler zu laden und zu starten sind.

Der Erfindung liegt die **Aufgabe** zugrunde, ein effizientes Verfahren und ein System zur Weiterleitung von Informationen, insbesondere Datentelegrammen oder Datenpaketen, zwischen den Linien- und Bereichskopplern in einem verteilten Netzwerk, anzugeben, wodurch vorgenannte Nachteile vermeidbar sind.

Diese Aufgabe wird durch ein Verfahren zur Weiterleitung von Informationen zwischen den Linien- und Bereichskopplern in einem verteilten Netzwerk, mit den in Anspruch 1 angegebenen Merkmalen gelöst.

Vorteilhafte Ausgestaltungen und ein System zur Weiterleitung von Informationen zwischen den Linien- und Bereichskopplem in einem verteilten Netzwerk, insbesondere in einem Installationsbussystem der Gebäudetechnik, sind in weiteren Ansprüchen und der Beschreibung angegeben.

Die Erfindung basiert darauf, dass zur Weiterleitung von Information mittels Datenpaketen oder Datentelegrammen in den Linien- oder Bereichskopplern eines verteilten Systems Datenstrukturen mit Informationen über die weiterzuleitenden Datenpakete abgelegt werden. Die vorzugsweise in Adressen abgelegen Informationen über die weiterzuleitenden Datenpakete, werden dynamisch verwaltet und während des Ablaufs des Verfahrens von den Kopplern selbst zyklisch und/oder ereignisorientiert automatisch generiert.

Die Erfindung betrifft weiterhin ein System zur Weiterleitung von Information mittels Datenpaketen oder Datentelegrammen über die Koppler des verteilten Netzwerkes, wobei die Koppler Datenstrukturen aufweisen, welche beispielsweise als Filtering Databases (Datenbank zur Datenfilterung) ausgeführt sind. Die Informationen über die weiterzuleitenden Datenpakete oder Datentelegramme sind vorzugsweise in dynamischen Adressen abgelegt. Die Koppler weisen weiterhin Module auf, welche die dynamischen Adressen mittels eines automatisch ablaufenden Verfahrens nach einer festgelegten zyklisch ablaufenden Zeitdauer generieren.

In einer alternativen Ausführungsform ist die Datenstruktur so ausgeführt, dass ein erster Teil der Adressen über die aus dem Stand der Technik bekannte Filtertabelle und ein zweiter Teil der Adressen mittels der erfindungsgemäßen Filtering Database, also mittels einer dynamischen Verwaltung verwaltet werden, um so zu vermeiden, dass bei einer kompletten dynamischen Verwaltung der Hardwarerahmen zu umfangreich würde.

Die Erfindung beruht weiterhin darauf, dass die zwischen Linien und Bereichen des verteilten Systems übertragenen Informationen in Form von Datentelegrammen oder Datenpaketen A bestimmte Adressen aufweisen, welche während der Inbetriebnahmephase in der Filtering Database abgelegt werden und die Adressen entsprechend der Information, ob sie zu einem weiteren Bereich oder einer weiteren Linie weitergeleitet werden, dahingehend gekennzeichnet werden.

Ein Datenpaket mit einer Zieladresse, die in der Filtering Database mit einer Kennung "nicht weiterleiten" versehen ist, wird nicht weitergeleitet und somit auch seine Weiterleitung nicht bestätigt.

Für die Durchführung des erfindungsgemäßen Verfahrens ist Voraussetzung, dass die Informationen in der Filtering Database der Koppler dynamisch verwaltet werden. Dazu wird ein dynamisches Routing (Weiterleitung) der Datenpakete innerhalb der Linien und Bereiche des verteilten Systems angewendet.

Auf diese Weise wird erreicht, dass sich die Übertragung der Datenpakete automatisch an die aktuelle Situation im verteilten Netz anpasst. Ausgefallene und/oder neu hinzugekommene Geräte werden dynamisch berücksichtigt und in die Filtering Databases der Koppler mit einbezogen.

Die Filtertabelleneinträge, also die dynamisch zu verwaltenden Zieladressen der Datenpakete werden automatisch von "weiterleiten" auf "nicht weiterleiten" gestellt, wenn ihre Weiterleitung von einer anderen Linie oder Bereich nicht bestätigt wird.

Die dynamisch zu verwaltenden Zieladressen der nicht zu weiteren Linien oder Bereichen weitergeleiteten Datenpakete werden zyklisch oder ereignisorientiert von "nicht weiterleiten" auf "weiterleiten" mittels einer mehrstufigen Rücksetzfunktion, beispielsweise eines Recovery-Verfahrens gesetzt und somit die Adressen zum erneuten "weiterleiten" freigegeben. Das oben beschriebene Verfahren wird erneut durchlaufen, wobei die Filtering Database neu generiert wird.

Das Recovery-Verfahren wird dabei zyklisch und/oder ereignisorientiert beispielsweise in den folgenden Ausführungsvarianten ausgeführt:

In einer vorteilhaften Ausführungsvariante werden die dynamisch verwalteten Adressen in sogenannten Zeitscheiben abgelegt. Die Zeitscheiben bezeichnen dabei die Zeit, in der eine Anwendung einen Prozessor belegt, bevor zu einer anderen Anwendung umgeschaltet wird. Die Zeitscheiben werden also zyklisch, je nach einem zuvor eingestellten Wert, automatisch von "nicht weiterleiten" wieder auf "weiterleiten" gesetzt.

Eine weitere Ausführungsvariante basiert auf der Anzahl der Datentelegramme dahingehend, dass die Kennung einer Adresse nicht nach einer bestimmten Zeit, sondern nach einer zuvor festgelegten Anzahl von nicht weitergeleiteten Telegrammen von "nicht weiterleiten" auf "weiterleiten" gesetzt wird.

Auch mittels eines manuellen Rücksetzbefehls ist eine automatische Generierung der dynamisch verwalteten Adressen ausführbar.

Da die in den Kopplern abgelegten Filtering Databases auf diese Weise alle Änderungen der Informationen über die weiterzuleitenden Datentelegramme, also der Adressenzuordnungen, übernehmen, verringert sich der Verwaltungsaufwand innerhalb des verteilten Systems.

Durch die dynamische Verwaltung der Zieladressen in den Filtering Databases wird in vorteilhafter Weise der Busverkehr zwischen den Linien und Bereichen des verteilten Systems entlastet.

Die Vorteile der Erfindung sind weiterhin darin zu sehen, dass durch die einstellbare Zeitdauer und dem Rücksetzen derjenigen Adressen in den Filtering Databases, welche nicht weitergeleitet werden, eine Systemsicherheit im Fehlerfall oder bei einer Änderung der Konfiguration des Systems gewährleistet wird.

Mittels eines dynamischen automatisch ablaufenden Routingverfahrens werden in den Kopplern Informationen abgelegt, in welchen Linien und Bereichen die Adressen der jeweiligen Systemkomponenten zum Einsatz kommen und entlasten so in vorteilhafter Weise komplett oder teilweise den Busverkehr zwischen Linien und Bereichen, indem eine feste unflexible und mit einem hohen administrativen Aufwand durchzuführende feste Einstellung der Adressen für die Information, welche Datenpakete weitergeleitet werden, nicht mehr erforderlich ist.

In einer alternativen Ausführungsvariante nutzt das dynamischen Routing der Datenpakete; welches nach Ablauf einer definierten Zeitdauer innerhalb des verteilten Systems durchgeführt wird, eine komprimierte Datenverarbeitung in den Filtering Databases der Koppler, wobei beispielsweise mittels eines Komprimierverfahrens oder einer Speicherung von Teilbereichen der Dätenpakete eine Einsparung des erforderlichen Speicherplatzes erreicht wird.

Dabei beruht die komprimierte Datenverarbeitung darauf, dass in den Kopplern zu denen die Datenpakete weitergeleitet werden, entweder mittels eines geeigneten Komprimierverfahrens oder einer nur teilweisen Speicherung der Gruppenadressen eine Reduzierung des Datenbestandes in der Filtering Databases erreicht wird.

In einer weiteren Ausführungsform wird das erfindungsgemäße Verfahren mittels eines richtungsabhängigen Routingverfahrens ausgeführt, bei welchem die Datenpakete nur einseitig innerhalb der Linien und Bereiche des verteilten Systems weitergeleitet und in die andere Richtung gesperrt werden.

Mit der während des Ablaufes des Verfahrens automatisch durchgeführter Generierung der Filtering Databases entfallen das Erzeugen und Laden dieser Datenstrukturen mittels einer Parametriersoftware ganz oder teilweise. Daraus ergibt sich in vorteilhafter Weise eine Zeit- und Kostenersparnis insbesondere schon während der Inbetriebnahmephase aber auch während der Systempflege oder der Erweiterungsphase.

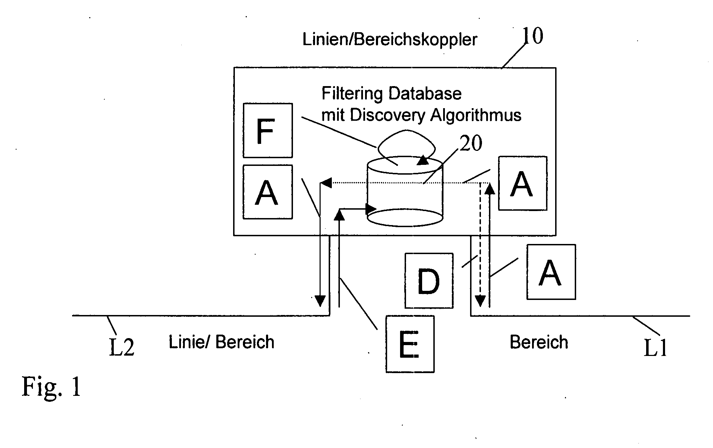

Anhand von in der Figur 1 dargestellten Ausführungsbeispieles sollen die Erfindung sowie vorteilhafte Ausgestaltungen und Verbesserungen der Erfindung näher erläutert und beschrieben werden.

In der einzigen Fig. 1 ist ein Teilbereich eines verteilten Systems gezeigt, wobei eine erste Buslinie L1 über einen Linien/ Bereichskoppler 10 mit einer zweiten Buslinie L2 verbunden ist und über die Linien L1, L2 Informationen in Form von Datentelegrammen oder Datenpaketen A ausgetauscht werden. Eine Entscheidung über die Weiterleitung der Datentelegramme A durch den Koppler 10 wird anhand einer Datenstruktur, welche als Filtering Database 20 ausgeführt ist und im Koppler 10 abgelegt ist, getroffen.

In der Filtering Database 20 sind dazu dynamische Adressen abgelegt, welche die Informationen über die weiterzuleitenden Datenpakete oder Datentelegramme A umfassen.

Ein von der Linie L1 ankommendes Datenpaket A wird anhand der in der Filtering Database 20 abgelegten Informationen über die Weiterleitung der Datenpakete A entweder weitergeleitet oder nicht weitergeleitet.

Wird das Datenpaket A mit einer Zieladresse, welche in der Filtering Database 20 mit der Kennung "weiterleiten" markiert ist durch die Filtering Database 20 des Kopplers 10 zur Linie L2 weitergeleitet, wird vom Koppler 10, unmittelbar nach dem Empfang des Datenpaketes A eine Rückmeldung oder Bestätigung D, beispielsweise in Form eines IACK (Immidiat ACKnowledge), an die Linie L1 gesendet und damit der korrekte Empfang des gesendeten Datenpaketes A vom Koppler 10 bestätigt.

Wird das Datenpaket A nicht weitergeleitet, wird über die Linie L1 keine Rückmeldung oder alternativ keine Bestätigung D zurückgesendet. Die Kennung der Adresse in der Filtering Database 10 ist auf "nicht weiterleiten" gesetzt.

Ein weiteres Datenpaket E, welches die Linie L2 an den Koppler 10 sendet, wird von der Filtering Database 20 nicht durchgelassen und ebenfalls keine Bestätigung D über die Linie L2 zurückgemeldet.

Zyklisch und/oder ereignisgesteuert werden alle mit der Kennung "nicht weiterleiten" markierten dynamisch zu verwaltende Zieladressen in der Filtering Database 20 des Kopplers 10 automatisch mittels eines in einem Modul des Kopplers abgelegten automatisch ablaufenden Recovery-Verfahrens F wieder zum Weiterleiten frei gegeben und damit aktualisiert.

Das oben beschriebene Verfahren wird erneut durchlaufen, wobei die Filtering Database neu generiert wird.

## Patentansprüche

1. Verfahren zur Weiterleitung von Information mittels Datenpaketen oder Datentelegrammen (A) innerhalb eines verteilten Netzwerkes, mit mehreren über Linien- oder Bereichskoppler (10) verbundene Buslinien (L1), (L2) mit daran angeschlossenen Systemkomponenten, wobei in den Linien- oder Bereichskopplern (10) Datenstrukturen (20) vorhanden sind, in welchen Informationen über die weiterzuleitenden Datenpakete oder Datentelegramme (A) abgelegt werden, **dadurch gekennzeichnet, dass**
- in den Datenstrukturen (20) die Informationen über die weiterzuleitenden Datenpakete (A) dynamisch verwaltet werden, und
- die in den Datenstrukturen (20) abgelegten Informationen über die weiterzuleitenden Datenpakete (A) zyklisch und/oder ereignisorientiert automatisch generiert werden.

2. Verfahren nach Anspruch 1, **dadurch gekennzeichnet, dass** für die dynamische Verwaltung der Datenstrukturen (20) ein dynamisches Routing der Datenpakete (A) angewendet wird.

3. Verfahren nach einem der vorherigen Ansprüche, **dadurch gekennzeichnet, dass** parallel zur Generierung der Datenstrukturen (20) ein Recovery-Verfahren (F) durchlaufen wird.

4. Verfahren nach einem der vorherigen Ansprüche, **dadurch gekennzeichnet, dass** die Informationen über die weiterzuleitenden Datenpakete (A) in dynamisch verwalteten Adressen in den Datenstrukturen (20) der Koppler (10) abgelegt werden und die Adressen zyklisch und/oder ereignisorientiert automatisch überprüft und zurückgesetzt werden.

5. System zur Weiterleitung von Information mittels Datenpaketen oder Datentelegrammen (A) innerhalb eines verteilten Netzwerkes mit mehreren über Linienoder Bereichskoppler (10) verbundene Buslinien (L1), (L2) mit daran angeschlossenen Systemkomponenten, wobei in den Linien- oder Bereichskopplern (10) Datenstrukturen (20) vorhanden sind, in welchen Informationen über die weiterzuleitenden Datenpakete oder Datentelegramme (A) abgelegt sind, **dadurch gekennzeichnet, dass**
- in den Datenstrukturen (20) die Informationen in Form von dynamischen Adressen über die weiterzuleitenden Datenpakete (A) abgelegt sind, und
- die Koppler (10) Module aufweisen, welche die dynamischen Adressen mittels eines automatisch ablaufenden Verfahrens nach einer festgelegten zyklisch ablaufenden Zeitdauer oder/und ereignisorientiert generieren.

6. System nach Anspruch 5, **dadurch gekennzeichnet, dass** die Datenstruktur (20) als Datenbank ausgebildet ist.

7. System nach Anspruch 5 und 6, **dadurch gekennzeichnet, dass** die Koppler eine Rücksetzfunktion für die selbsttätig ablaufende Generierung der dynamischen Adressen aufweisen.

8. System nach Anspruch 5 bis 7, **dadurch gekennzeichnet, dass** zur Speicherung der Daten der Datenstruktur (20) eine komprimierte Datenspeicherung vorgesehen ist.

9. System nach einem der Ansprüche 5 bis 8, **dadurch gekennzeichnet, dass** ein Modul vorgesehen sind, welches zur automatischen Generierung der Datenstruktur (20) ein mehrstufiges Recovery-Verfahren (F) ausführt.

10. System nach Anspruch 5 bis 9, **dadurch gekennzeichnet, dass** der Koppler (10) eine Einrichtung umfasst, welche eine Bestätigung (B) für die weitergeleiteten Adressen ausführt.

11. System nach Anspruch 5 bis 10, **dadurch gekennzeichnet, dass** die Datenstruktur (20) nach einer festgelegten zyklisch ablaufenden Zeitdauer, nach dem Empfang einer festgelegten Anzahl von Datentelegrammen und/oder mittels eines Rücksetzbefehls generierbar sind.
